# EUROPÄISCHE PATENTANMELDUNG

(11) **EP 2 364 801 A1**
(43) Veröffentlichungstag der Anmeldung: **14.09.2011**
(21) Anmeldenummer: 11157156.8
(22) Anmeldetag: 07.03.2011
(51) Int. Cl.: B23B 13/08, B23Q 7/00

(54) **Ladevorrichtung zum Laden von Stangen zur Bearbeitung in einer Werkzeugmaschine**

(30) Priorität: 11.03.2010 DE 102010002781
(71) Anmelder: Gildemeister Aktiengesellschaft, 33689 Bielefeld (DE)
(72) Erfinder: Rigolone, France, 24010, Ponteranica (IT); Rota, Renato, 24030, Carvico (IT)
(74) Vertreter: MERH-IP Matias Erny Reichl Hoffmann

(57) **Zusammenfassung**

Die vorliegende Erfindung betrifft eine Ladevorrichtung zum Laden von Stangen zur Bearbeitung in einer Werkzeugmaschine, wobei die Ladevorrichtung dazu eingerichtet ist, eine Stange (1a) von einer Ausgangsposition in eine Endposition (42) zu verbringen und die Stange (1a) aus der Endposition (42) der Werkzeugmaschine zuzuführen, mit einem Auflageabschnitt (21) zur Bevorratung der Ladevorrichtung mit mindestens einer Stange (1a), die in der Ausgangsposition auf dem Auflageabschnitt (21) liegt, und einer verfahrbaren Transporteinrichtung (3) zum Transport der Stange (1a) von der Ausgangsposition in die Endposition. Die vorliegende Erfindung ist dadurch gekennzeichnet, dass die Transporteinrichtung (3) dazu eingerichtet ist, in einer Abwärtsbewegung die Stange (1a) infolge ihrer Schwerkraft entlang eines abwärts geneigten Führungsabschnitts (41b) abwärts zu transportieren, wobei die Stange (1a) durch einen ersten Stützabschnitt (31a) der Transporteinrichtung (3) abgestützt wird.

## Beschreibung

Die vorliegende Erfindung betrifft eine Ladevorrichtung zum Laden von Stangen zur Bearbeitung in einer Werkzeugmaschine, wobei die Ladevorrichtung dazu eingerichtet ist, eine Stange von einer Ausgangsposition in eine Endposition zu verbringen und die Stange aus der Endposition der Werkzeugmaschine zuzuführen, mit einem Auflageabschnitt zur Bevorratung der Ladevorrichtung mit mindestens einer Stange, die in der Ausgangsposition auf dem Auflageabschnitt liegt, und einer verfahrbaren Transporteinrichtung zum Transport der Stange von der Ausgangsposition in die Endposition.

Weiterhin betrifft die vorliegende Erfindung ein System mit einer Werkzeugmaschine zum Bearbeiten einer Stange und einer Ladevorrichtung zum Laden von Stangen zur Bearbeitung in der Werkzeugmaschine, wobei die Ladevorrichtung dazu eingerichtet ist, eine Stange von einer Ausgangsposition in eine Endposition zu verbringen und die Stange aus der Endposition der Werkzeugmaschine zuzuführen, mit einem Auflageabschnitt zur Bevorratung der Ladevorrichtung mit mindestens einer Stange, die in der Ausgangsposition auf dem Auflageabschnitt liegt, und einer verfahrbaren Transporteinrichtung zum Transport der Stange von der Ausgangsposition in die Endposition.

### HINTERGRUND DER ERFINDUNG

Derartige Ladevorrichtungen sind dem Stand der Technik bekannt und werden dafür eingesetzt, einer Werkzeugmaschine Stangen zuzuführen. Derartige Werkzeugmaschinen umfassen z.B. eine Drehbänke, Drehautomaten, Drehmaschinen oder ähnlichen Maschinen zur Bearbeitung von Stangen. Beispielsweise zeigt die EP 0 587 248 A1 eine Ladevorrichtung zum Laden von Stangen zur Bearbeitung in einer Werkzeugmaschine, wobei zuerst eine Stange von einer Ausgangsposition in eine Endposition verbracht wird und dann ausgehend von der Endposition in axialer Richtung der Stange der Werkzeugmaschine zugeführt wird. Hierbei ist die Endposition koaxial mit einer Zuführposition ausgerichtet, in der die Stange in axialer Richtung der Werkzeugmaschine zuzuführen ist, z.B. koaxial mit einer Spindel zur Aufnahme der zu bearbeitenden Stange.

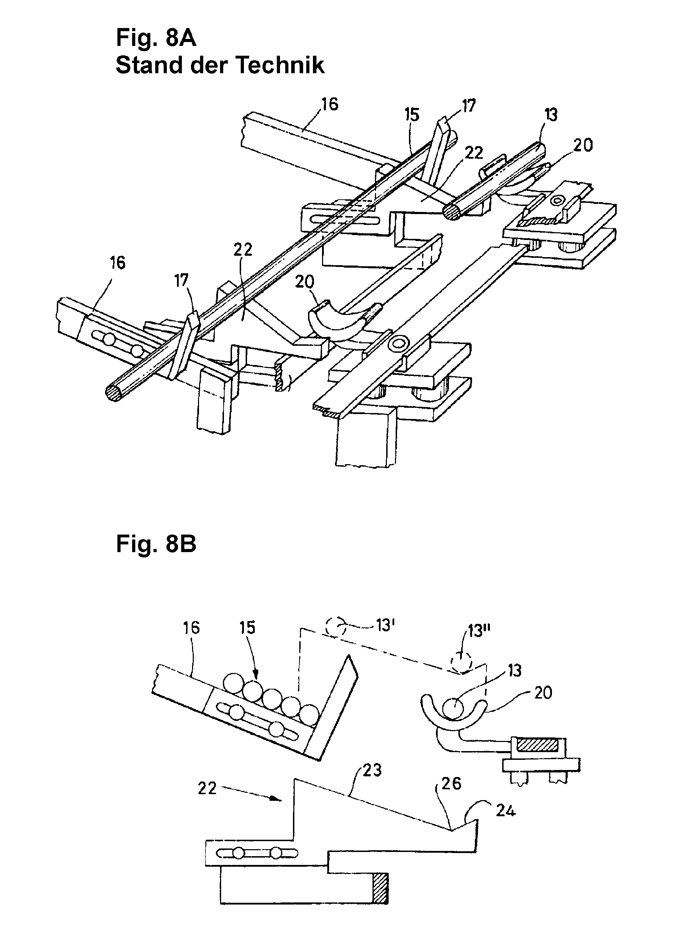

Fig. 8A zeigt eine schematische Perspektivansicht der für den Ladezyklus der Ladevorrichtung der EP 0 587 248 A1 relevanten Elemente, d.h. der relevanten Elemente für den Transport einer Stange von der Ausgangsposition in die Endposition. Fig. 8B zeigt eine schematische Seitenansicht der relevanten Elemente für den Ladezyklus gemäß der Lehre der EP 0 587 248 A1.

Die Ladevorrichtung zum Laden von Stangen zur Bearbeitung in einer Werkzeugmaschine gemäß der EP 0 587 248 A1 weist zwei in axialer Richtung der Stange parallel angeordnete Gleitrutschen 16 auf, an denen jeweils ein L-förmiges Halteelement 17 befestigt ist. Die Gleitrutschen 16 sind abwärts geneigt, so dass eine auf den Gleitrutschen 16 angeordnete Stange infolge ihrer Schwerkraft abrollt, bis sie von den Halteelemente 17 in einer Halteposition gehalten wird. In Fig. 8A ist hierbei eine Stange 15 beispielhaft in der Halteposition gezeigt. Diese Halteposition auf den Gleitrutschen 16 entspricht hierbei einer Ausgangsposition des Ladezyklus der Ladevorrichtung. Die Vorrichtung umfasst weiterhin zwei ebenfalls in axialer Richtung der Stange parallel angeordnete Hebeelemente 22, die für den Transport der Stange aus der Ausgangsposition auf den Gleitrutschen 16 zu der Endposition verwendet werden. Die Endposition der Stange ist hierbei anhand der Stange 13 in Fig. 8A ersichtlich. Zum Halten einer Stange in der Endposition umfasst die Ladevorrichtung der EP 0 587 248 A1 zwei Führungselemente 20, die im Profil halbkreisförmig ausgebildet sind und auf ihrer Oberfläche eine Aufnahme für eine Stange 13 bilden, die in der Endposition gehalten werden kann. Aus der Endposition wird die in den Führungselementen 20 liegende Stange 13 in axialer Richtung der Werkzeugmaschine zugeführt.

Der Ladezyklus bzw. der Transport einer Stange 13 aus der Ausgangsposition auf den Gleitrutschen 16 zu der Endposition in den Führungselementen 20 ist schematisch in Fig. 8B dargestellt. In Fig. 8B ist gezeigt, wie eine Mehrzahl von Stangen auf der Gleitrutsche angeordnet ist und von dem Halteelement 17 hintereinander zur Bevorratung gehalten wird. Die Stange 15, die hierbei direkt in Kontakt mit den Halteelementen 17 ist, wird von den Halteelementen 17 auf den Gleitrutschen 16 in der Ausgangsposition gehalten. Jedes der Hebeelemente 22 ist gemäß der Lehre der EP 0 587 248 A1 auf- und abwärts verfahrbar und ist am Beginn des Ladezyklus zu einer tiefen Position verfahren, die unterhalb der in der Ausgangsposition gehaltenen Stange 15 liegt. Jedes Hebeelement 22 umfasst eine abwärts geneigte Oberfläche 23, an die in einem Punkt 26, der später eine Halteposition der Stange im Hebeelement 22 definiert, einen Halteabschnitt anschließt, der durch eine aufwärts geneigte Oberfläche 24 ausgebildet ist.

Zum Aufnehmen der Stange 15 aus der Ausgangsposition werden die Hebeelemente 22 vertikal aufwärts verfahren, bis die Oberflächen 23 mit der Stange in der Ausgangsposition in Kontakt kommen. Bei weiter fortgeführter Aufwärtsbewegung der Hebeelemente 22 wird die Stange aus der Ausgangsposition in der Aufwärtsbewegung von den Gleitrutschen 16 abgehoben und entlang der Oberfläche der aufwärts geneigten Halteelemente 17 aufwärts geschoben, wobei die Stange in der Aufwärtsbewegung durch die Oberfläche 23 des Hebeelements 22 abgestützt bzw. aufwärts geschoben wird.

Die gestrichelte Linie in Fig. 8B illustriert die Position der Hebelelemente 22 in einer höchsten Position nach der vertikalen Aufwärtsbewegung. Hierbei ist die von der Oberfläche 23 gestützte Stange 13' von dem Kontakt mit den Halteelementen 17 freigegeben und rollt infolgedessen aufgrund ihrer Schwerkraft die abwärts geneigte Oberfläche 23 der Hebeelemente 22 ab, bis sie an den Haltebereich 24 anstößt und dann in der Halteposition 26 gehalten wird, wie anhand der Stange mit dem Bezugszeichen 13" dargestellt ist.

In einem darauf folgenden Schritt werden die Hebeelemente 22 vertikal abwärts verfahren, bis die Stange in dem runden Aufnahmeabschnitt der Führungselemente 20 in der Endposition abgelegt wird (siehe die Position der Stange 13 in Fig. 8B). Aus dieser Position wird die Stange dann in axialer Richtung der Werkzeugmaschine zugeführt. Die Hebeelemente 22 verfahren weiter vertikal abwärts und sind dann bereit, in einer daran anschließenden Aufwärtsbewegung in einem weiteren Ladezyklus eine nächste Stange aus der Ausgangsposition zu der Endposition zu transportieren.

Zwar stellt der Ladezyklus gemäß der Lehre der EP 0 587 248 A1 ein einfaches System zum Transport der Stange aus der Ausgangsposition in die Endposition zur Verfügung, da nur eine Auf- und daran anschließende Abwärtsbewegung des Hebeelements 22 zur Durchführung des Transports von der Ausgangsposition in die Endposition erforderlich ist. Jedoch tritt hierbei der große Nachteil auf, dass die zu transportierende Stange, nachdem sie von dem Kontakt mit den Halteelementen 17 in der Aufwärtsbewegung der Hebeelemente 22 freigegeben wird, infolge Ihrer Schwerkraft die abwärts geneigte Oberfläche 23 abrollt und mit einem Stoß auf den Haltebereich 24 der Hebeelemente 22 aufprallt.

Durch den auftretenden Stoß nach der Abrollbewegung der Stange auf der Oberfläche 23 des Hebeelements 22 ergibt den großen Nachteil, dass die gesamte Ladevorrichtung, die mit der Werkzeugmaschine gekoppelt ist, einem Stoß bzw. einer Erschütterung ausgesetzt ist, die zusätzlich auch an die Werkzeugmaschine weitergegeben wird. Hierdurch werden die Bearbeitungsvorgänge an der Werkzeugmaschine nachteilig beeinflusst. Bei langzeitiger Verwendung der Ladevorrichtung ist es hier zusätzlich durchaus möglich, dass Teile der Ladevorrichtung oder der Werkzeugmaschine beschädigt werden. Weiterhin erzeugen derartige Stöße beim Ladezyklus ein äußerst lautes Geräusch bei dem erfolgten Stoß. Es ergibt sich gemäß Fig. 8B jedoch noch der weitere Nachteil, dass die Größe des Haltebereichs 24 den Querschnitt der ladbaren Stangen beschränkt, da Stangen mit einem größeren Querschnitt durch den in der abrollenden Bewegung auftretenden Impuls gegebenenfalls nach dem Abrollen über den Haltebereich 24 hinaus befördert werden. Weiterhin ist es aufgrund der erforderlichen Abrollbewegung der Stange auf der Oberfläche 23 des Hebeelements 22 lediglich möglich Stangen mit kreisförmigen Querschnitt mittels der Vorrichtung gemäß der Lehre der EP 0 587 248 A1 zu der Endposition transportiert werden, die zum Abrollen geeignet sind. Stangen mit einem von einem kreisförmigen Querschnitt in der Form abweichenden Querschnitt, insbesondere mit eckigem Querschnitt, können jedoch nicht transportiert werden.

Im Hinblick auf die vorstehend beschriebenen Nachteile einer Ladevorrichtung gemäß der Lehre der EP 0 587 248 A1 wurde beispielsweise in EP 1 029 619 A1 eine Ladevorrichtung zum Laden von Stangen zur Bearbeitung in einer Werkzeugmaschine bereitgestellt, die eine Ladevorrichtung gemäß der EP 0 587 248 A1 derart weiterbildet, dass ein stoßarmer bzw. geräuscharmer Ladevorgang beim Transport einer Stange von der Ausgangsposition in die Endposition bewerkstelligt wird. Hierbei beschreibt die EP 1 029 619 A1 insbesondere eine Ladevorrichtung, die ebenfalls abwärts geneigte Gleitrutschen zur Bevorratung von Stangen aufweist, wobei eine auf den Gleitrutschen angeordnete Stange von Rückhaltefingern in einer Ausgangsposition gehalten wird. Die Rückhaltefinger sind hierbei aufwärts geneigt.

Analog zu der Lehre der EP 0 587 248 A1 umfasst die Ladevorrichtung der EP 1 029 619 A1 ebenfalls ein auf- und abwärts verfahrbares Hebeelement, welches analog zu der vorstehend beschriebenen Ladevorrichtung eine Stange von den Gleitrutschen aus der Ausgangsposition aufnimmt und entlang einer Oberfläche der aufwärts geneigten Rückhaltefingern aufwärts schiebt. Im Unterschied zu der vorstehend beschriebenen Ladevorrichtung wird jedoch gemäß der Lehre der EP 1 029 619 A1 ein Aufnahmeabschnitt des Hebeelements gleichzeitig als Halteabschnitt zum Halten der Stange in der Endposition verwendet. Demzufolge wird die Stange in dem Moment, in dem sie den Kontakt mit dem Rückhaltefinger verliert, in dem Aufnahmeabschnitt des Hebeelements aufgenommen und dann nur noch durch weiteres Aufwärtsverfahren des Hebeelements bis zu der Endposition verfahren wird, welche Endposition koaxial mit der Zuführposition ausgerichtet ist, in der die Stange axial der Werkzeugmaschine zugeführt wird.

Die Ladevorrichtung gemäß der Lehre der EP 1 029 619 A1 weist hierbei jedoch den großen Nachteil auf, dass die Vorrichtung nur mittels eines komplizierten Mechanismus auf Stangen unterschiedlicher Stangenquerschnitte angepasst werden kann. Einerseits muss die höchste Position nach der Aufwärtsbewegung des Hebeelements auf den Stangenquerschnitt angepasst werden, d.h. eine Stange mit kleinerem Querschnitt muss zu einer höheren Position des Hebeelements verfahren werden als eine Stange mit einem größeren Stangenquerschnitt, da es erforderlich ist, den Mittelpunkt des Stangequerschnitts in der Endposition auf die Zuführposition der Werkzeugmaschine koaxial auszurichten. Zusätzlich ist es jedoch noch mittels eines komplizierten Mechanismus erforderlich, den Neigungswinkel bzw. die Form der Rückhaltefinger in Abhängigkeit des Stangenquerschnitts anzupassen. Hierbei muss die höchste Position des Hebeelements nach der Aufwärtsbewegung synchronisiert mit dem angepassten Neigungswinkel des Rückhaltefingers eingestellt werden.

### ZUSAMMENFASSUNG DER ERFINDUNG

Im Hinblick auf die vorstehend beschriebenen Nachteile der aus dem Stand der Technik bekannten Ladevorrichtungen zum Laden von Stangen zur Bearbeitung an einer Werkzeugmaschine ist es eine Aufgabe der vorliegenden Erfindung, die Nachteile des Stands der Technik zu vermeiden und insbesondere eine Ladevorrichtung zum Laden von Stangen zur Bearbeitung an einer Werkzeugmaschine bereitzustellen, bei der der Transport einer Stange aus einer Ausgangsposition in eine Endposition schnell, stoßarm, ohne Erschütterungen, ohne Geräuschentwicklung und auf besonders einfache Weise erfolgt, wobei die Ladevorrichtung weiterhin in einfacher Weise für das Laden von Stangen mit unterschiedlichen Querschnittsgrößen und Querschnittsformen geeignet ist und in einfacher Weise für das Laden von Stangen mit unterschiedlichen Querschnittsgrößen angepasst werden kann, so dass es auf besonders einfache Weise und ohne komplizierter Einstellungs- bzw. Anpassungsmechanismen möglich ist, mit der Ladevorrichtung sowohl Stangen eines größeren als auch eines kleineren Durchmessers der Werkzeugmaschine zuzuführen.

Die vorstehend beschriebenen Aufgaben der vorliegenden Erfindung werden gelöst durch eine Ladevorrichtung zum Laden von Stangen zur Bearbeitung in einer Werkzeugmaschine nach Anspruch 1 und ein System mit einer Werkzeugmaschine zum Bearbeiten einer Stange und einer Ladevorrichtung zum Laden von Stangen zur Bearbeitung in einer Werkzeugmaschine nach Anspruch 14. Merkmale bevorzugter Ausführungsformen der vorliegenden Erfindung werden in den abhängigen Ansprüchen beschrieben.

Gemäß der vorliegenden Erfindung wird eine Ladevorrichtung zum Laden von Stangen zur Bearbeitung in einer Werkzeugmaschine bereitgestellt. Die Ladevorrichtung ist dazu eingerichtet, eine Stange von einer Ausgangsposition in eine Endposition zu verbringen und die Stange aus der Endposition der Werkzeugmaschine zuzuführen. Die Ladevorrichtung umfasst einen Auflageabschnitt zur Bevorratung der Ladevorrichtung mit mindestens einer Stange, die in der Ausgangsposition auf dem Auflageabschnitt liegt, und eine verfahrbare Transporteinrichtung zum Transport der Stange von der Ausgangsposition in die Endposition. Die vorliegende Erfindung zeichnet sich dadurch aus, dass die Transporteinrichtung dazu eingerichtet ist, in einer Abwärtsbewegung die Stange infolge ihrer Schwerkraft entlang eines abwärts geneigten Führungsabschnitts abwärts zu transportieren, wobei die Stange durch einen ersten Stützabschnitt der Transporteinrichtung abgestützt wird.

Erfindungsgemäß wird hierbei die Stange von einer Ausgangsposition in die Endposition mittels einer Transporteinrichtung verbracht, die derart eingerichtet ist, dass die Stange während einer Abwärtsbewegung der Transporteinrichtung infolge ihrer Schwerkraft entlang eines abwärts geneigten Führungsabschnitts transportiert wird und dabei gleichzeitig durch einen Stützabschnitt der Transporteinrichtung abgestützt wird.

Dies ermöglicht es insbesondere vorteilhaft, die Stange in einer einfachen Abwärtsbewegung in Richtung der Endposition zu verbringen, ohne dass die Stange einen abwärts geneigten Abschnitt abrollt und auf ein Halteelement stößt. Die vorliegende Erfindung ermöglicht es somit insbesondere, einen Ladezyklus schnell und stoßarm bzw. sogar ohne Stoß auszuführen, da die Stange in einer Abwärtsbewegung entlang einer abwärts geneigten Führungsebene bzw. eines Führungsabschnitts nicht abrollt, sondern stützend bewegt wird bzw. abwärts geführt wird. Wenn kein Stoß einer abrollenden Stange auf ein Halteelement erfolgt, können hierbei auch schwere große Stangen mit großem Stangequerschnitt stoßarm und in der Abwärtsbewegung geführt zur Endposition transportiert werden.

Der Begriff "Stangen", wie er im Sinne der Erfindung verwendet wird, umfasst hierbei Stangen mit einem runden, insbesondere kreisförmigen Querschnitt. Der Begriff "Stangen" ist jedoch nicht auf derartige Stangen beschränkt, sondern umfasst weiterhin längliche Objekte von beliebigem Querschnitt, gegebenenfalls auch sich veränderndem Querschnitt in Längsrichtung, die einer Werkzeugmaschine zur Bearbeitung zugeführt werden. Insbesondere sind auch längliche Objekte mit Hohlquerschnitten umfasst, z.B. Rohre oder Röhren. Mit dem Begriff längliches Objekt ist hierbei ein Objekt gemeint, dessen Länge den Durchmesser bzw. die Ausmaße des Querschnitts übersteigt. Die vorliegende Erfindung ermöglicht es weiterhin vorteilhaft Stangen zu transportieren, die eine eckige Querschnittsform aufweisen, da es erfindungsgemäß nicht erforderlich ist, dass die Stange während des Ladezyklus an einer geneigten Oberfläche abrollt, wie es im Stand der Technik gelehrt wird. Die Stangen können z.B. sechseckige Querschnittsformen aufweisen.

Vorzugsweise ist die Transporteinrichtung weiterhin dazu eingerichtet, die Stange in einer Aufwärtsbewegung von dem Auflageabschnitt abzuheben und die Stange entlang eines aufwärts geneigten Führungsabschnitts aufwärts zu schieben, wobei die Stange vorzugsweise durch einen zweiten Stützabschnitt der Transporteinrichtung abgestützt wird. Dies ermöglicht es vorteilhaft, die Stange in einer Aufwärts- und daran anschließenden Abwärtsbewegung von der Ausgangsposition in die Endposition zu transportieren, wobei die Stange in der Aufwärtsbewegung auf besonders einfach Art und Weise von einem geneigten Auflageabschnitt bzw. einem Abschnitt eines Stangenmagazins abgehoben werden kann.

Vorzugsweise wird die Stange in einer höchsten Position bei dem Transport von der Ausgangsposition zu der Endposition von dem ersten und dem zweiten Stützabschnitt der Transporteinrichtung abgestützt. Dies ermöglicht den Vorteil, dass die Stange in der höchsten Position bei dem Transport von der Ausgangsposition zu der Endposition sowohl von dem ersten als auch von dem zweiten Stützabschnitt der Transporteinrichtung abgestützt wird, wobei der erste und der zweite Stützabschnitt vorzugsweise entgegengesetzt geneigt sind, so dass die Stange in einer Ruhelage zwischen dem ersten und dem zweiten Stützabschnitt in einer definierten Position gehalten werden kann. Dies ist insbesondere dann vorteilhaft, wenn die Transporteinrichtung eine Transportbewegung ausführt, bei der die Stange nur von Elementen der verfahrbaren Transporteinrichtung gehalten wird oder nur mit Elementen der Transporteinrichtung in Kontakt ist, z.B. wenn sie nach einer Aufwärtsbewegung entlang eines aufwärts geneigten Führungsabschnitts den Kontakt zu dem Führungsabschnitt verliert und ohne die stützende Führung durch den ersten und den zweiten Stützabschnitt gegebenenfalls infolge ihrer Schwerkraft eine Rollbewegung ausführen könnte, die wieder zu einem Stoß führen würde. Es ergibt sich der weitere Vorteil, dass die Stange in der höchsten Position bei dem Transport von der Ausgangsposition zu der Endposition eine definierte Ruhelage gestützt von dem ersten und dem zweiten Stützabschnitt inne hat. Dies ist insbesondere bei Ausführungsformen vorteilhaft, bei denen zusätzlich zu der Aufwärts- und Abwärtsbewegung der Transporteinrichtung noch eine seitliche Transportbewegung der Stange mittels der Transporteinrichtung vorgesehen ist.

Vorzugsweise umfasst die Transporteinrichtung ein Transportelement mit einem ersten winkelförmigen Abschnitt, wobei ein erster Schenkel des Winkels vorzugsweise den ersten Stützabschnitt und ein zweiter Schenkel des Winkels des ersten winkelförmigen Abschnitts vorzugsweise den zweiten Stützabschnitt bildet. Dies hat insbesondere den Vorteil, dass der winkelförmige Abschnitt auf besonders einfach Weise eine Position der Stange definiert, wenn sie von dem ersten und dem zweiten Stützabschnitt gestützt bzw. gehalten wird. Des Weiteren ist es durch den winkelförmigen Abschnitt auf dem Transportelement möglich, zwei entgegengesetzt geneigte Stützabschnitte auf einfache Art und Weise in einem Element auszubilden. Der winkelförmige Abschnitt kann hierbei vorzugsweise V-förmig ausgebildet sein, wobei es weiterhin möglich ist, den Abschnitt zwischen dem ersten und dem zweiten Stützabschnitt durch eine Rundung auszuformen. Winkelförmig meint hierbei nicht nur Formen, bei denen ein aufwärts und ein abwärts geneigter Abschnitt geradlinig in einem Winkel aufeinander treffen, vielmehr ist es weiterhin möglich, dass der erste und/oder der zweite Stützabschnitt eine auf- bzw. abwärts verlaufende gekrümmte Oberfläche aufweist, die V-förmig bzw. in einem Winkel zusammenkommen.

Vorzugsweise ist die Transporteinrichtung auf- und abwärts verfahrbar, insbesondere bevorzugt vertikal auf- und abwärts verfahrbar. Dies hat den Vorteil, dass ein besonders einfacher Transportmechanismus zur Verfügung gestellt werden kann, bei dem die Transporteinrichtung insbesondere auf- und abwärts verfahrbar ist. Dies ermöglicht es, Ladevorrichtungen bereitzustellen, bei denen ein erfindungsgemäßer Ladevorgang lediglich durch eine Aufwärts- und Abwärtsbewegung ausgeführt wird, ohne eine dazwischen liegende seitliche Transportbewegung. Somit kann ein schneller und effizienter Ladezyklus des Verbringens der Stange von der Ausgangsposition in die Endposition durchgeführt werden.

Vorzugsweise ist der Auflageabschnitt ein abwärts geneigter Auflageabschnitt, auf dem die in der Ausgangsposition liegende Stange vorzugsweise von einem Rückhalteelement entgegen ihrer Schwerkraft zurückgehalten wird. Dies ermöglicht es, auf besonders einfache Art und Weise ein Stangenbevorratungsmittel, z.B. ein Stangenmagazin, auszubilden, wobei die in der Ausgangsposition liegende Stange auf dem abwärts geneigten Auflageabschnitt aufliegt und entgegen ihrer Schwerkraft durch das Rückhalteelement zurückgehalten wird und dadurch exakt in der Ausgangsposition gehalten werden kann, aus der die Transporteinrichtung die Stange zum Transport zu der Endposition aufnimmt.

Vorzugsweise weist das Rückhalteelement den aufwärts geneigten Führungsabschnitt auf. Dies ermöglicht einen besonders einfachen Aufbau einer Ladevorrichtung gemäß der vorliegenden Erfindung, da das Rückhalteelement den aufwärts geneigten Führungsabschnitt aufweist, wobei der Führungsabschnitt vorzugsweise integral mit dem Rückhalteelement ausgebildet ist.

Vorzugsweise umfasst die Ladevorrichtung weiterhin eine Zuführeinrichtung, die dazu eingerichtet ist, die Stange aus der Endposition der Werkzeugmaschine zuzuführen, wobei die Zuführeinrichtung vorzugsweise ein Zuführelement mit einem Aufnahmeabschnitt umfasst, in dem die Stange in der Endposition liegt. Dies ermöglicht es, die Stange der Werkzeugmaschine aus der Endposition zuzuführen, insbesondere ähnlich zu dem Stand der Technik in axialer Richtung, so dass die Werkzeugmaschine nicht an die Funktionsweise der erfindungsgemäßen Ladevorrichtung angepasst werden muss, sondern in gewohnter Art und Weise axial zugeführte Stangen aufnehmen kann. Hierbei ist die Endposition insbesondere bevorzugt auf die Zuführposition ausgerichtet, d.h. koaxial auf diese ausgerichtet, gegebenenfalls koaxial mit einer Spindel der Werkzeugmaschine, an der die Stange zur Bearbeitung aufgenommen werden kann.

Vorzugsweise weist das Zuführelement den abwärts geneigten Führungsabschnitt auf. Dies ermöglicht einen besonders einfachen Aufbau der Ladevorrichtung gemäß der vorliegenden Erfindung, da der abwärts geneigte Führungsabschnitt entlang dessen die Stange in der Abwärtsbewegung infolge ihrer Schwerkraft gestützt von einem Stützabschnitt geführt wird, integral mit dem Zuführelement ausgebildet werden kann. Dies ermöglicht erfindungsgemäß einen direkten Transport der Stange aus der erfindungsgemäßen Abwärtsbewegung entlang der abwärts geneigten Führungsebene bzw. des abwärts geneigten Führungsabschnitts hin zur Endposition, die bevorzugt in dem Zuführelement ausgebildet ist.

Vorzugsweise weist das Zuführelement einen zweiten winkelförmigen Abschnitt auf, wobei ein Schenkel des Winkels des zweiten winkelförmigen Abschnitts vorzugsweise den abwärts geneigten Führungsabschnitt bildet. Dies ermöglicht eine besonders einfache Ausführung eines Aufnahmeabschnitts zum Aufnehmen der Stange in der Endposition, wenn das Zuführelement einen winkelförmigen Abschnitt aufweist, wobei auf besonders einfach Art und Weise auch eine erfindungsgemäße abwärts geneigte Führungsebene bzw. ein abwärts geneigter Führungsabschnitt bereitgestellt werden kann, da dieser durch einen Schenkel des Winkels des winkelförmigen Abschnitts des Zuführelements ausgebildet werden kann. Gemäß einer bevorzugten Ausführungsform ist der winkelförmige Abschnitt V-förmig ausgebildet. Die Endposition der Stange kann hierbei auf besonders einfach Weise durch die zwei Schenkel des winkelförmigen Abschnitts auf dem Zuführelement definiert werden.

Vorzugsweise ist die Zuführeinrichtung dazu eingerichtet, die Endposition der Stange auf eine Zuführposition auszurichten, aus der die Stange der Werkzeugmaschine zuzuführen ist. Dies ermöglicht es besonders vorteilhaft, die Ladevorrichtung zum Laden von Stangen unterschiedlicher Querschnitte zu verwenden, da die Stangen axial auf eine Zuführposition bzw. koaxial mit einer Zuführposition zum Zuführen an die Werkzeugmaschine ausgerichtet werden können, indem die durch die Zuführeinrichtung vorgegebene Endposition der Stangen koaxial mit der Zuführposition ausgerichtet bzw. zentriert werden kann.

Vorzugsweise ist das Zuführelement zum Ausrichten der Endposition der Stange auf- und abwärts verfahrbar, insbesondere bevorzugt vertikal auf- und abwärts verfahrbar. Dies ermöglicht es, auf besonders einfache Art und Weise die durch das Zuführelement vorgegebene Endposition der Stange durch Auf- und Abwärtsverfahren des Zuführelements in vertikaler Richtung derart auszurichten, dass die Endposition der Stange in Abhängigkeit des Querschnitts der Stange koaxial mit der Zuführposition ausgerichtet ist. Bei einer vertikalen Auf- und Abwärtsausrichtung der Endposition der Stange koaxial mit der Zuführposition kann ein besonders einfacher Ausrichtmechanismus bereitgestellt werden, so dass die Ladevorrichtung auf besonders einfache Art und Weise auf Stangen unterschiedlicher Querschnitte angepasst werden kann.

Vorzugsweise weist das Zuführelement den aufwärts geneigten Führungsabschnitt auf. Dies ermöglicht einen besonders einfachen Aufbau, bei dem der aufwärts geneigte Führungsabschnitt bei Ausführungsbeispielen der vorliegenden Erfindung mit einer Aufwärtsbewegung beim Transport der Stange ggf. direkt integral mit dem Zuführelement ausgebildet werden kann. Bei einer besonders bevorzugten Ausführungsform weist das Zuführelement hierbei sowohl den aufwärts geneigten Führungsabschnitt als auch den abwärts geneigten Führungsabschnitt auf, so dass die Führungsabschnitte sowie der Aufnahmeabschnitt zum Aufnehmen der Stange in der Endposition in einem Element integriert werden können, welches gegebenenfalls zusätzlich als Rückhalteelement funktionieren kann, wenn der aufwärts geneigte Führungsabschnitt weiter als Halteabschnitt verwendet wird, der die Stangen entgegen ihrer Schwerkraft in der Ausgangsposition auf dem abwärts geneigten Auflageabschnitt liegend hält.

Die vorstehend beschriebenen unterschiedlichen Abschnitte, z.B. Auflageabschnitte, Aufnahmeabschnitte, Stützabschnitte oder Führungsabschnitte können durch Einzelstücke oder zusammengesetzte Elemente bereitgestellt werden. Die Abschnitte können weiterhin zu Elementen zusammengefügt werden, oder die Abschnitte können integral in einem monolithischen Element bereitgestellt werden. Dies gilt insbesondere für den ersten und den zweiten Stützabschnitt. Weiterhin gilt das für den ersten Führungsabschnitt, den zweiten Führungsabschnitt und/oder den Auflageabschnitt.

Schließlich wird gemäß der vorliegenden Erfindung ein System bereitgestellt, das eine Werkzeugmaschine zum Bearbeiten einer Stange und eine Ladevorrichtung zum Laden von Stangen zur Bearbeitung in der Werkzeugmaschine gemäß einem der vorstehend beschriebenen Aspekte umfasst.

### KURZBESCHREIBUNG DER FIGUREN

Fig. 1A bis Fig. 1E zeigen schematisch einen Ladezyklus des Ladevorgangs an einer Ladevorrichtung gemäß eines bevorzugten Ausführungsbeispiels der vorliegenden Erfindung.
Fig. 2 illustriert schematisch das Ausrichten einer Endposition auf eine Zuführposition mit einer Zuführeinrichtung einer Ladevorrichtung gemäß des bevorzugten Ausführungsbeispiels der vorliegenden Erfindung in Abhängigkeit eines Stangenquerschnitts.
Fig. 3A zeigt schematisch eine Ladevorrichtung gemäß des bevorzugten Ausführungsbeispiels der vorliegenden Erfindung, bei der eine Endposition auf eine Zuführposition für Stangen eines großen Stangenquerschnitts ausgerichtet ist und Fig.3B zeigt schematisch eine Ladevorrichtung gemäß dem bevorzugten Ausführungsbeispiel der vorliegenden Erfindung, bei der eine Endposition auf eine Zuführposition für Stangen eines großen Stangenquerschnitts ausgerichtet ist.
Fig. 4 zeigt eine schematische Perspektivansicht einer Ladevorrichtung gemäß einem Ausführungsbeispiel der vorliegenden Erfindung.
Fig. 5 zeigt eine schematische Seitenansicht der Ladevorrichtung aus Fig. 4.
Fig. 6 zeigt ein System mit einer Werkzeugmaschine zum Bearbeiten einer Stange und der Ladevorrichtung aus Fig. 4.
Figs. 7A bis 7H zeigen beispielhaft einen Ladezyklus einer Stange zu der Werkzeugmaschine aus Fig. 6, in dem die Stange aus einer Endposition in axialer Richtung der Werkzeugmaschine zugeführt wird.
Fig. 8A zeigt eine Perspektivansicht einer Ladevorrichtung gemäß dem Stand der Technik. Fig. 8B zeigt eine schematische Seitenansicht der für den Ladevorgang relevanten Elemente einer Ladevorrichtung aus Fig. 48.

### AUSFÜHRLICHE BESCHREIBUNG BEVORZUGTER AUSFÜHRUNGSBEISPIELE DER VORLIEGENDEN ERFINDUNG

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

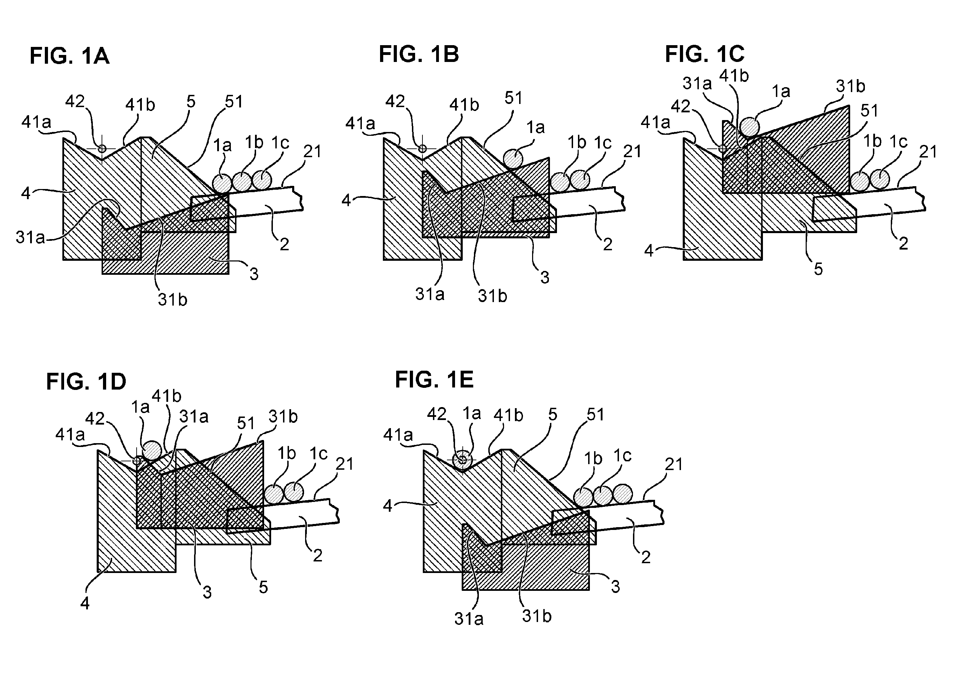

Fig. 1A bis Fig. 1E zeigen schematisch einen Ladezyklus des Ladevorgangs an einer Ladevorrichtung zum Laden von Stangen zur Bearbeitung in einer Werkzeugmaschine gemäß einem Ausführungsbeispiel der vorliegenden Erfindung.

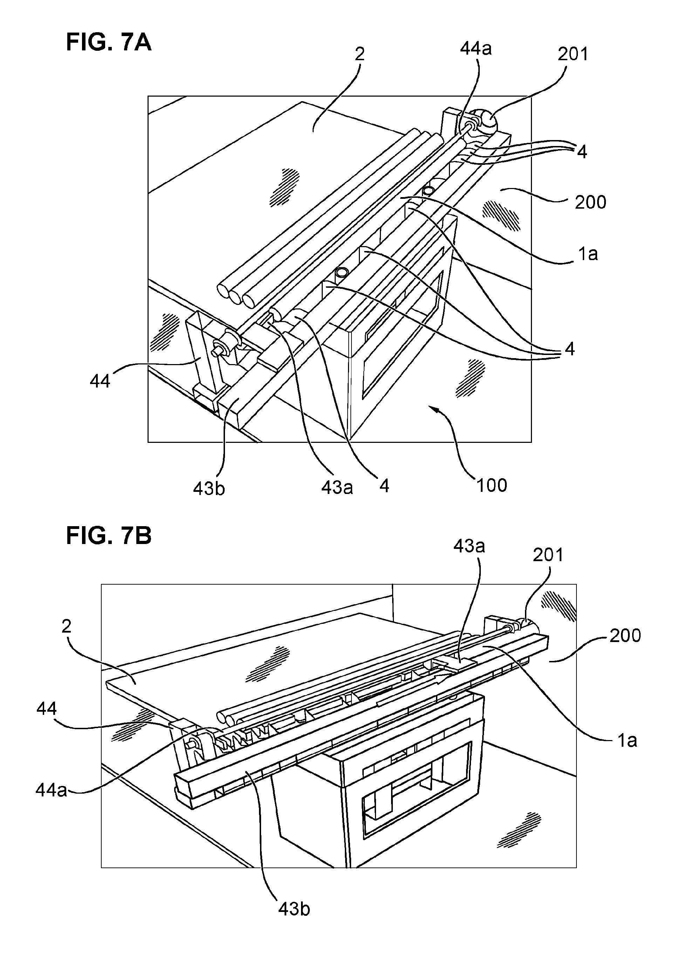

Die Ladevorrichtung ist dazu eingerichtet, eine Stange 1a von einer Ausgangsposition in eine Endposition 42 zu verbringen und die Stange 1a aus der Endposition 42 der Werkzeugmaschine zuzuführen. Das Zuführen der Stange 1a aus der Endposition in die Werkzeugmaschine zur Bearbeitung erfolgt hierbei in axialer Richtung der Stange 1a, d.h. senkrecht zur Zeichenebene in den Figuren 1A bis 1E (siehe z.B. Figs. 7A bis 7H).

Wie z.B. in Fig. 1A gezeigt ist, umfasst die Ladevorrichtung in diesem Ausführungsbeispiel ein Lagerelement 2 mit einem abwärts geneigten Auflageabschnitt 21, ein Rückhalteelement 5 mit einem aufwärts geneigten Führungsabschnitt 51, ein Transportelement 3 einer Transporteinrichtung mit einem ersten Stützabschnitt 31a und einem zweiten Stützabschnitt 31b und ein Zuführelement 4 mit einem aufwärts geneigten Abschnitt 41a und einem abwärts geneigten Führungsabschnitt 41b.

Das Lagerelement 2 weist den abwärts geneigten Auflageabschnitt 21 zur Bevorratung der Ladevorrichtung mit einer Mehrzahl von Stangen 1a bis 1c auf, die auf dem abwärts geneigten Auflageabschnitt 21 liegen. Eine Stange 1a liegt hierbei in der Ausgangsposition auf dem Auflageabschnitt 21. Die in der Ausgangsposition liegende Stange 1a und die weiteren Stangen 1b und 1c werden von dem Rückhalteelement 5 entgegen ihrer Schwerkraft zurückgehalten. Das Rückhalteelement 5 weist den aufwärts geneigten Führungsabschnitt 51 auf. Hierbei ist die Stange 1a in der Ausgangsposition einerseits in Kontakt mit dem aufwärts geneigten Führungsabschnitt 51 des Rückhalteelements 5 und andererseits in Kontakt mit dem abwärts geneigten Auflageabschnitt 21 des Lagerelements 2.

Die Transporteinrichtung umfasst ein vertikal auf- und abwärts verfahrbares Transportelement 3 zum Transport der Stange 1a von der Ausgangsposition in die Endposition 42. Das Transportelement 3 weist einem ersten winkelförmigen Abschnitt auf, wobei ein erster Schenkel des Winkels den ersten Stützabschnitt 31a und ein zweiter Schenkel des Winkels des ersten winkelförmigen Abschnitts den zweiten Stützabschnitt 31b bildet.

Fig. 1B zeigt die Ladevorrichtung zu einem Zeitpunkt der Aufwärtsbewegung des Transportelements 3. Die Stange 1a wurde hierbei zwischen den Zeitpunkten der Fig. 1A und 1B in einer Aufwärtsbewegung durch den zweiten Stützabschnitt 31b des Transportelements 3a von dem Auflageabschnitt 21 abgehoben. Die Stange 1a wird entlang des aufwärts geneigten Führungsabschnitts 51 des Rückhalteelements aufwärts geschoben, wobei die Stange 1a durch den zweiten Stützabschnitt 31b des Transportelements 3 abgestützt wird.

Fig. 1C zeigt die Ladevorrichtung zu einem Zeitpunkt an dem das Transportelement 3 die Aufwärtsbewegung beendet und sich in einer höchsten Position zwischen der Auf- und der Abwärtsbewegung befindet. Die Stange 1a wird in der höchsten Position bei dem Transport von der Ausgangsposition zu der Endposition 42 von dem ersten und dem zweiten Stützabschnitt 31a, 31b des Transportelements 3 gestützt und ist somit sowohl mit dem ersten Stützabschnitt 31a als auch mit dem zweiten Stützabschnitt 31b in Kontakt.

Fig. 1D zeigt die Ladevorrichtung zu einem Zeitpunkt der Abwärtsbewegung des Transportelements 3. Die Stange 1a wird infolge ihrer Schwerkraft entlang eines abwärts geneigten Führungsabschnitts 41b des Zuführelements 3 abwärts bewegt, wobei die Stange (1a) durch einen ersten Stützabschnitt (31a) der Transporteinrichtung (3) abgestützt wird.

Fig. 1E zeigt die Ladevorrichtung zu einem Zeitpunkt an dem der Transport der Stange 1a von der Ausgangsposition zu der Endposition bereits abgeschlossen ist und die Stange 1a in der Endposition 42 liegt. Die Ladevorrichtung weist die Zuführeinrichtung auf (weitere Elemente des Zuführeinrichtung neben dem Zuführelement sind in Fig. 1A bis Fig. 1E nicht dargestellt), die dazu eingerichtet ist, die Stange 1a aus der Lage in der Endposition 42 der Werkzeugmaschine axial zuzuführen. Die Zuführeinrichtung umfasst das Zuführelement 4 mit dem Aufnahmeabschnitt, in dem die Stange 1a in der Endposition 42 liegt. Der Aufnahmeabschnitt des Zuführelements 4 ist hier durch einen zweiten winkelförmigen Abschnitt ausgebildet, wobei ein Schenkel des Winkels des zweiten winkelförmigen Abschnitts den abwärts geneigten Führungsabschnitt 41b bildet.

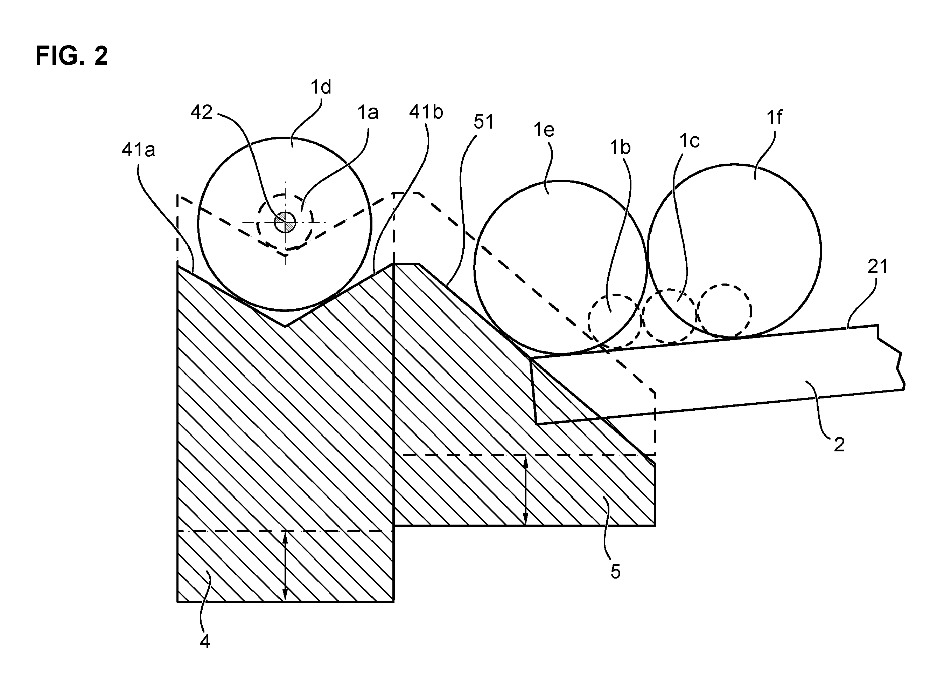

Fig. 2 illustriert schematisch das koaxiale Ausrichten bzw. Zentrieren einer Endposition auf eine Zuführposition mit einer Zuführeinrichtung einer Ladevorrichtung gemäß des bevorzugten Ausführungsbeispiels der vorliegenden Erfindung in Abhängigkeit eines Stangenquerschnitts. Die Ladevorrichtung ist weiterhin dazu eingerichtet, Stangen unterschiedlicher Querschnitte der Werkzeugmaschine zuzuführen. Hierbei ist der Werkzeugmaschine eine Stange unabhängig von der Querschnittsgröße axial in der gleichen Zuführposition der Werkzeugmaschine zuzuführen, d.h. sowohl eine Mittelachse einer Stange mit kleinerem Querschnitt als auch eine Mittelachse einer Stange mit größerem Querschnitt muss koaxial mit einer Zuführposition positioniert werden. Dies ist in Fig. 2 schematisch für eine Stange 1a mit einem kleineren Querschnitt und eine Stange 1d mit einem größeren Querschnitt dargestellt, wobei beide Stangen 1a und 1d in der jeweilig ausgerichteten Endposition liegen, die auf die Zuführposition ausgerichtet ist, bzw. auf die Zuführposition zentriert ist. Die Position der Stange wird hier durch den Mittelpunkt des Stangenquerschnitts definiert, wobei der Mittelpunkt des Stangenquerschnitts in der Endposition der Stange auf die Zuführposition axial zentriert ist.

Wie in Fig. 2 schematisch dargestellt ist, ist die Zuführeinrichtung der Ladevorrichtung dazu eingerichtet, die Endposition 42 der Stange 1a bzw. 1d in Abhängigkeit des jeweiligen Stangenquerschnitts auf die Zuführposition auszurichten, aus der die Stange 1a der Werkzeugmaschine zuzuführen ist, wobei das Zuführelement 4 zum Ausrichten der Endposition 42 der Stange 1a vertikal auf- und abwärts verfahrbar ist.

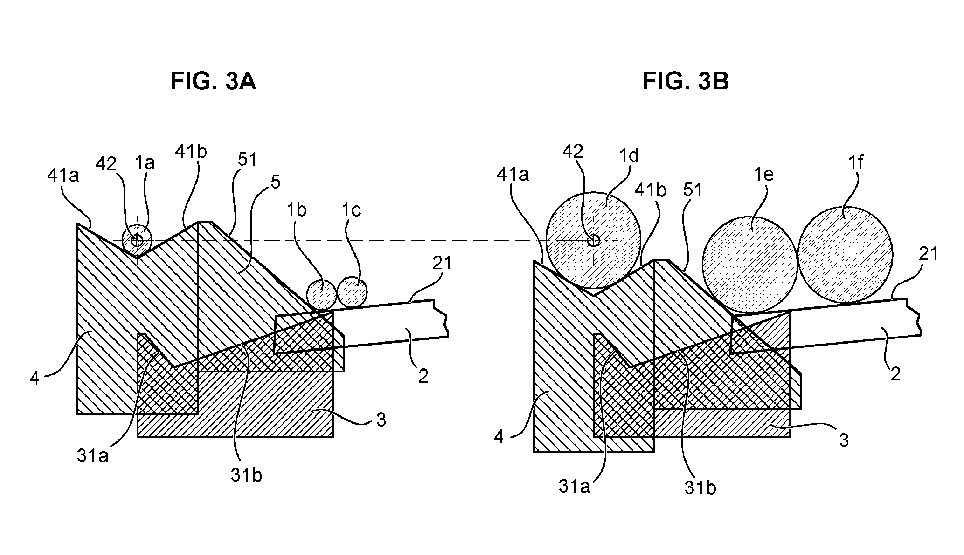

Fig. 3A zeigt schematisch eine Ladevorrichtung gemäß des bevorzugten Ausführungsbeispiels der vorliegenden Erfindung, bei der eine Endposition auf eine Zuführposition für Stangen eines großen Stangenquerschnitts ausgerichtet ist und Fig. 3B zeigt schematisch eine Ladevorrichtung gemäß dem bevorzugten Ausführungsbeispiel der vorliegenden Erfindung, bei der eine Endposition auf eine Zuführposition für Stangen eines großen Stangenquerschnitts ausgerichtet ist. Hierbei weist die Stange 1a in der Endposition in Fig. 3A einen kleineren Querschnitt als die Stange 1d in der Endposition in Fig. 3B auf. Das Zuführelement 4 ist mit dem Rückhalteelement 5 in Fig. 3B tiefer positioniert als das Zuführelement 4 in Fig. 3A, um die Stange 1d mit dem größeren Querschnitt in der Endposition in der Zuführposition auszurichten, bzw. zu zentrieren. Das Zuführelement 4 ist hierbei mit dem Rückhalteelement 5 in Fig. 3B im Vergleich zu der Anordnung in Fig. 3A in vertikaler Richtung abwärts verfahren. Fig. 3A und 3B zeigen, dass der geneigte Auflageabschnitt 21 dazu geeignet ist, sowohl Stangen des kleineren Durchmessers (siehe Fig. 3A) als auch Stangen des größeren Durchmessers (siehe Fig. 3B) in einer Ausgangsposition zu bevorraten, ohne dass eine Neuausrichtung erforderlich ist. Die Anordnung des Transportelements 3 und des Lagerelements 2 relativ zueinander ist in Fig. 3A und Fig. 3B gleich.

Vorstehend wurde ein besonders bevorzugtes erstes Ausführungsbeispiel der vorliegenden Erfindung unter Bezugnahme auf die Fig. 1A bis 3B beschrieben. Hierbei wurde jeweils Bezug genommen auf ein Lagerelement 2, ein Transportelement 3, ein Rückhalteelement 5 und ein Zuführelement 4. In der vorstehend beschriebenen Ausführungsform sind das Lagerelement 2, das Transportelement 3 und das Zuführelement 4 jeweils durch getrennte Elemente ausgebildet, wobei das Rückhalteelement 5 in einer Einheit mit dem Zuführelement 4 ausgebildet ist, d.h. entweder in fixierter Befestigung mit dem Zuführelement 4 befindlich oder einstückig bzw. gar monolithisch ausgebildet ist. Die vorliegende Erfindung ist jedoch nicht auf derartige Ausführungsbeispiele beschränkt. Vielmehr kann auch das Lagerelement in einer Einheit mit dem Rückhalteelement ausgebildet sein (z.B. an dem Lagerelement befestigt, wie bei der Ausführungsform des Stands der Technik in Fig. 8A, oder als einstückiges Element ausgebildet).

Weiterhin ist es möglich, das Rückhalteelement 5 getrennt von dem Zuführelement 4 anzuordnen. Für eine Anpassung bzw. Ausrichtung der Elemente in Abhängigkeit unterschiedlicher Stangenquerschnitte ist es lediglich für die Funktionsweise des ersten Ausführungsbeispiel lediglich erforderlich, dass das Zuführelement bzw. ein Aufnahmeabschnitt der Zuführeinrichtung verfahrbar ist, um die Stange koaxial mit der Zuführposition zum Zuführen zu der Werkzeugmaschine auszurichten bzw. zu zentrieren.

Bei Ausführungsbeispielen der vorliegenden Erfindung mit einem separat von dem Zuführelement 4 angeordneten Rückhalteelement 5 ist es weiterhin möglich, modifizierte Ausführungsbeispiele der vorliegenden Erfindung bereitzustellen, bei denen das Transportelement 3 nicht nur eine Auf- und anschließende Abwärtsbewegung vollführt. Vielmehr sind Ausführungsbeispiele möglich, bei denen zusätzlich ein seitliches Verfahren des Transportelements in dem Transport der Stange von der Ausgangsposition zu der Endposition umfasst ist. Auch eine Mehrzahl von aneinander anschließenden Auf- und Abwärtsbewegungen, gegebenenfalls in Verbindung mit einer Mehrzahl von seitlichen Transportbewegungen, ist möglich.

Bei Ausführungsformen mit einer zusätzlichen seitlichen Transportbewegung der Transporteinrichtung bzw. des Transportelements 3 ist es insbesondere möglich, das seitliche Verfahren des Transportelements 3 mit einer Auf- und/oder einer Abwärtsbewegung zu kombinieren, z.B. durch schräges Auf- bzw. schräges Abwärtsverfahren des Transportelements 3, in einer besonders bevorzugten Ausführungsform in einer kombinierten Kreisbewegung, bei der die Aufwärtsbewegung durch Kreisbewegung kontinuierlich in die Abwärtsbewegung übergeht.

Weiterhin ist es möglich, dass bei Ausführungsbeispielen, bei denen ein Rückhalteelement 5 in Kombination mit einem Zuführelement 4, d.h. in einem Stück oder zumindest in Kontakt miteinander, bereitgestellt wird, der aufwärts geneigte Führungsabschnitt 51 und der abwärts geneigte Führungsabschnitt 41d direkt ineinander übergehen oder durch einen weiteren Abschnitt miteinander verbunden sind (siehe z.B. den kurzen abgeflachten Abschnitt zwischen dem aufwärts geneigten Führungsabschnitt 51 und dem abwärts geneigten Führungsabschnitt 41d in Fig. 1A bis 1E).

Wie weiterhin anhand von Fig. 8A ersichtlich ist, ist es gemäß dem Stand der Technik gebräuchlich, jedes der Elemente, d.h. das Lagerelement 2, das Transportelement 3, das Rückhalteelement 5 und das Zuführelement 4 jeweils zumindest zweifach bereitzustellen, wobei die Elemente in axialer Richtung hintereinander bzw. insbesondere parallel zueinander angeordnet sind, um der Stange in jedem Zeitpunkt des Ladezyklus jeweils zumindest zwei Auflageflächen bzw. zwei Auflagepunkte bereitzustellen.

Hierbei ist es z.B. möglich, Ausführungsbeispiele der vorliegenden Erfindung bereitzustellen, bei denen ähnlich zu Fig. 8A zwei oder mehr äußere Lagerelemente 2 bereitgestellt werden, zwischen denen sich zwei oder mehr Transportelemente 3 befinden, zwischen denen zwei oder mehr Zuführelemente 4 angeordnet sind. Jedoch ist es ebenfalls möglich, eine alternierende Anordnung der jeweiligen Elemente hintereinander in beliebiger Reihenfolge in axialer Richtung bereitzustellen. Insbesondere ist es möglich, eines der Elemente aus der Gruppe Lagerelement 2, Transportelement 3, Rückhalteelement 5 und Zuführelement 4 nur einmal bereitzustellen, gegebenenfalls in einer in axialer Richtung verbreiterten Ausführungsform, um der Stange eine breite Auflagefläche zu bieten, wobei die restlichen Elemente außerhalb des nur einmal bereitgestellten Elements in mehrfacher Ausführung angeordnet sind.

Es sind weiterhin Ausführungsbeispiele möglich, bei denen die Stützabschnitte 31a und 31b auf getrennten Elementen bereitgestellt werden. Insbesondere sei hierbei darauf aufmerksam gemacht, dass die Funktionsweise des Ladezyklus gemäß des Ausführungsbeispiels der Fig. 1A bis Fig. 1E anhand einer seitlichen Profilansicht erklärt ist, so dass Elemente und Abschnitte der Fig. 1A bis Fig. 1E zueinander beliebig in axialer Richtung verschoben sein können, solange die seitliche Profilansicht nicht verändert ist. Z.B. kann das Rückhalteelement 5 und das Zuführelement 4 auf einer axialen Position bereitgestellt werden, z.B. als ein integral ausgebildetes Element, oder in axialer Richtung zueinander verschoben, so dass die seitliche Ansicht, d.h. die Ansicht aus axialer Richtung, nicht verändert ist. Dies gilt ebenfalls für das Transportelement 3, das gegebenenfalls aus zwei in axialer Richtung verschobenen Elementen gebildet werden kann, wobei jedes dieser Elemente jeweils den Abschnitt 31a bzw. den Abschnitt 31b aufweist, wobei diese zwei Elemente in axialer Richtung verschoben sind, ohne die seitliche Profilansicht aus axialer Richtung zu verändern.

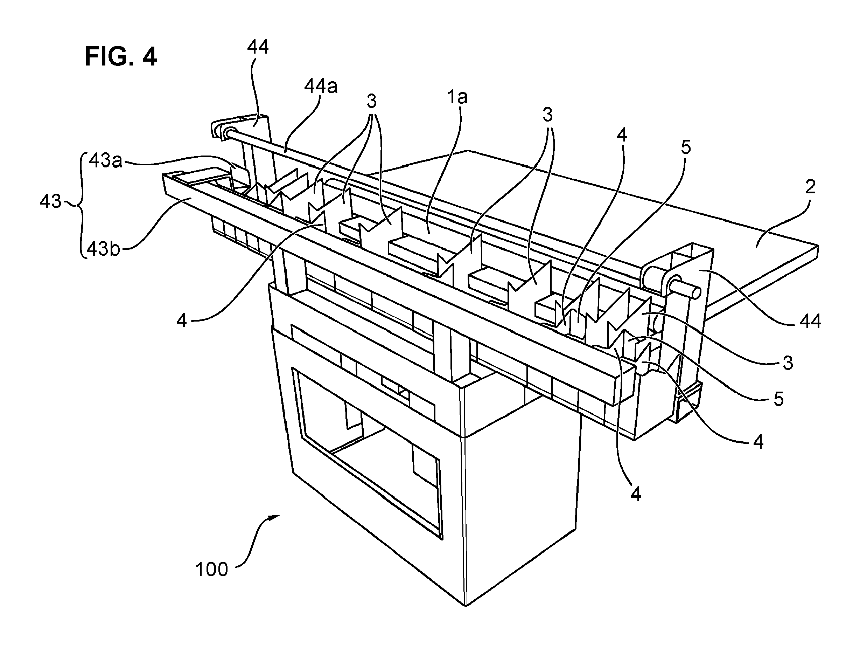

Fig. 4 zeigt eine schematische Perspektivansicht einer Ladevorrichtung 100 gemäß einem Ausführungsbeispiel der vorliegenden Erfindung. Hierbei ist die Ladevorrichtung 100 dazu geeignet, eine Stange 1a gemäß den vorstehend beschriebenen Ausführungsbeispielen von einer Ausgansposition auf einem Lagerelement 2 (hier beispielhaft eine geneigte Ebene) zu einer Endposition zu transportieren. Die Ladevorrichtung 100 umfasst eine Transporteinrichtung mit einer Mehrzahl von Transportelementen 3, eine Zuführeinrichtung mit einer Mehrzahl von Zuführelementen 4 und eine Mehrzahl von Rückhaltelementen 5. Einige der Mehrzahl von Zuführelementen sind in einer Einheit mit jeweils einem der Rückhaltelemente 5 ausgebildet. Die Transportelemente 3 und die Zuführelemente 4 sind in axialer Richtung, d.h. in Zuführrichtung zu einer Werkzeugmaschine, abwechselnd angeordnet. Beispielhaft sind an den Seiten mehr Transportelemente 3 und Zuführelemente 4 angeordnet als in der Mitte, wie in Fig. 4 ersichtlich ist. Dies ermöglicht eine größere Flexibilität bezüglich der Länge der zu landenden Stange. Die axiale Seitenansicht der Elemente 3, 4 und 5 entspricht der Anordnung der Figs. 1A bis 1E.

Die Zuführeinrichtung der Ladevorrichtung 100 umfasst weiterhin eine Axialzuführeinrichtung 43 (z.B. auch als Shuttle-Einrichtung bezeichnet) mit einem Stützabschnitt 43a (z.B. auch als Shuttle bezeichnet). Die Axialzuführeinrichtung 43 ist dazu eingerichtet, den Stützabschnitt 43a in axialer Richtung entlang eines Axialzuführ-Führungsabschnitts 43b zu verfahren, um eine in der Endposition auf den Zuführelemente 4 gehaltene Stange in axialer Richtung zu verschieben, um die Stange aus der Endposition einer Werkzeugmaschine zuzuführen. Weiterhin umfasst die Zuführeinrichtung eine Schieber-Einrichtung 44 (z.B. auch als Pusher-Einrichtung bezeichnet) mit einer Schieber-Stange 44a, die in der Schieber-Einrichtung 44 in axialer Richtung verschiebbar gehalten wird. Die Schieber-Einrichtung 44 ist dazu eingerichtet, die Schieber-Stange 44a in der Endposition in eine Zuführposition auszurichten (z.B. durch Auf- und Abwärtsverfahren). Der Mechanismus des axialen Zuführens einer Stange aus der Endposition zu der Werkzeugmaschine wird im Folgenden erläutert werden.

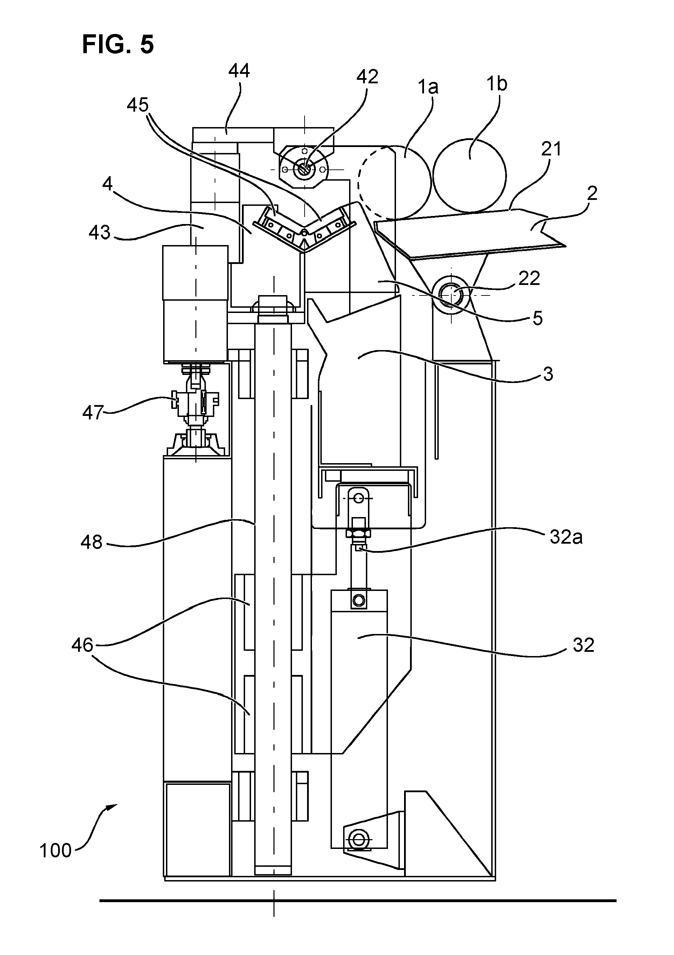

Fig. 5 zeigt eine schematische Seitenansicht der Ladevorrichtung 100 aus Fig. 4 in axialer Richtung. Hierbei ist insbesondere ersichtlich, dass die axiale Seitenansicht der Elemente 3, 4 und 5 der Anordnung der Figs. 1A bis 1E entspricht. Die Ladevorrichtung 100 umfasst weiterhin ein Kipplager 22 zum Kippen des Lagerelements 2 der Auflagefläche 21 des Lagerelements 2. Das Kippen kann manuell oder automatisch ausführbar sein. Fig. 5 zeigt weiterhin einen pneumatischen Zylinder 32, an dem ein Transportelement 3 mittels eines Befestigungsmittels 32a befestigt ist und mit dem das Transportelement 3 auf- und abwärts verfahrbar ist, um einen erfindungsgenmäßen Ladezyklus gemäß den Figs. 1A bis 1E ausführen zu können.

Die Zuführeinrichtung umfasst weiterhin eine Ausrichteinrichtung 47, die dazu eingerichtet ist, ein Ausrichtelement 48 auf- und abwärts zu verfahren. Hierbei ist zumindest ein Zuführelement 4 an dem Ausrichtelement 48 befestigt. Das Ausrichtelement 48 ist hierbei beispielhaft in zwei Kugelhülslagern 46 gehalten. Mittels der Ausrichteinrichtung 47 kann die Endposition 42 auf dem Zuführelement in Abhängigkeit eines Stangendurchmessers bzw. eines Stangenquerschnitts auf die axiale Zuführposition zum Zuführen einer Stange zu der Werkzeugmaschine ausgerichtet werden (siehe hierzu auch Figs. 2 bis 3B und die dazugehörige Beschreibung). Die Ausrichtung kann hierbei durch manuelle Bedienung der Ausrichteinrichtung 47 oder automatisch erfolgen.

In Fig. 5 ist weiterhin beispielhaft gezeigt, dass zumindest eines der Zuführelemente 3 Lagerrollen 45 umfasst (welche zumindest einen Teil der geneigten Abschnitte 41a und 41b aus Figs. 1A bis 1E ausbilden), um das axiale Zuführen der Stange zu der Werkzeugmaschine zu erleichtern.

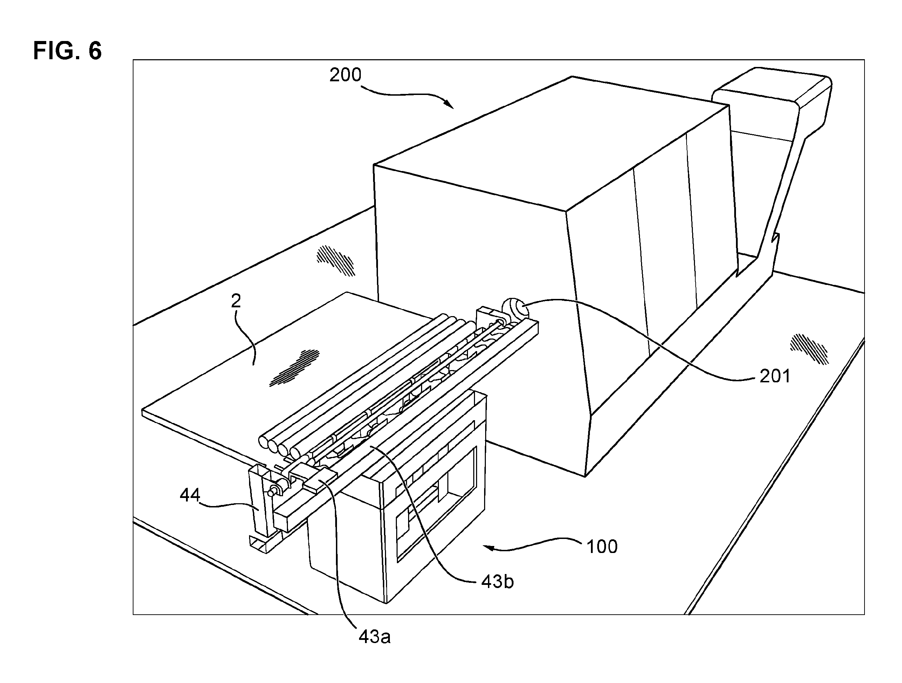

Fig. 6 zeigt ein System umfassend eine Werkzeugmaschine 200 zum Bearbeiten einer Stange und eine erfindungsgemäße Ladevorrichtung 100 aus Fig. 4. Die Werkzeugmaschinen umfasst hier beispielhaft eine Öffnung 201, durch die eine Stange in axialer Richtung aus einer auf die Zuführposition ausgerichteten Endposition der Werkzeugmaschine 200 zum Bearbeiten der Stange zugeführt werden kann. Die Werkzeugmaschine 200 kann beispielsweise eine Drehmaschine sein, wobei die Stange in axialer Richtung der Spindel der Drehmaschine zugeführt wird.

Figs. 7A bis 7H zeigen beispielhaft einen Ladezyklus einer Stange 1a aus der Endposition auf den Zuführelementen 3, wenn die Endposition in Abhängigkeit des Stangenquerschnitts der Stange 1a auf die Zuführposition ausgerichtet ist, zu der Werkzeugmaschine 200 aus Fig. 6 Werkzeugmaschine, in dem die Stange aus der Endposition in axialer Richtung der Werkzeugmaschine zugeführt wird.

In Fig. 7A ist die Ladevorrichtung 100 in einem Zustand dargestellt, die der Situation aus Fig. 1E entspricht. Die Stange 1a ist in Aufnahmeabschnitten 41a, 41b auf den Zuführelementen in einer Endposition nach erfindungsgemäßem Transport der Stange 1a in die Endposition gehalten, wobei die Endposition in Abhängigkeit des Stangendurchmessers der Stange 1a auf die Zuführposition ausgerichtet ist, in der die Stange 1a in axialer Richtung der Werkzeugmaschine 200 durch die Öffnung 201 zuzuführen ist.

In Fig. 7B ist beispielhaft gezeigt, wie die Stange 1a durch Verfahren des Stützabschnitts 43a (d.h. z.B. eines Shuttles 43a) entlang des Führungsabschnitts 43b der Axialzuführeinrichtung 43 in axialer Richtung (siehe Pfeil in Fig. 7B) durch die Öffnung 201 der Werkzeugmaschine 200 zugeführt wird.

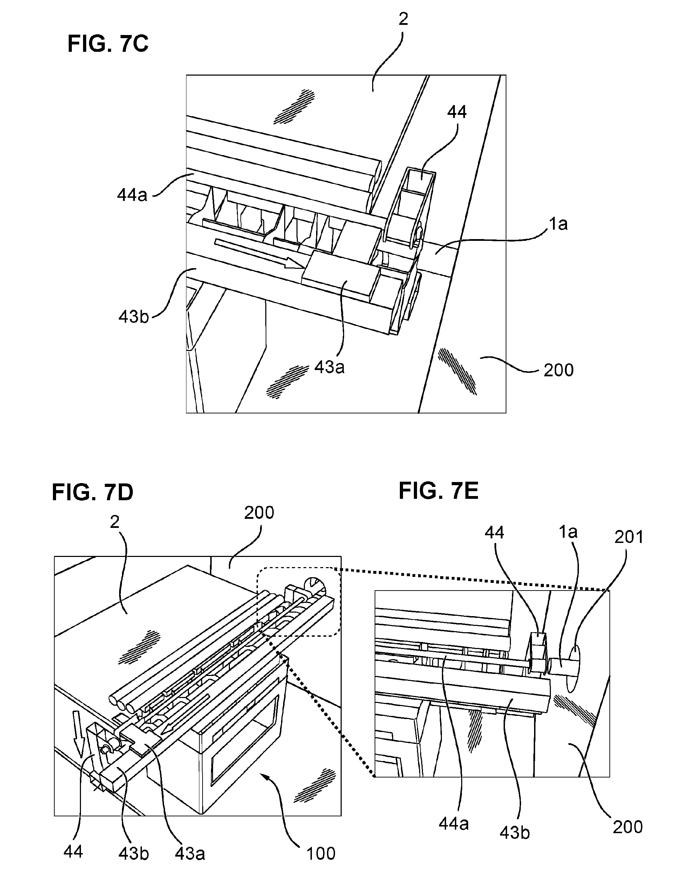

Fig. 7C zeigt die Ladevorrichtung 100 in einem Zustand in dem der Stützabschnitts 43a nahezu bis zu dem einen Ende des Führungsabschnitts 43b verfahren ist und die Stange 1a nahezu vollständig in die Öffnung 201 der Werkzeugmaschine 200 eingeschoben ist. Der Stützabschnitt wird hierauf wieder in entgegengesetzter Richtung entlang des Führungsabschnitts 43b verfahren. Anschließend wird die Schieber-Stange 44a der Schieber-Einrichtung 44 durch Abwärtsverfahren in der Zuführposition ausgerichtet, d.h. koaxial bzw. im Wesentlichen koaxial mit der Stange 1a (siehe Figs. 7D und 7E; Fig. 7E zeigt hierbei Details aus dem gestrichelten Ausschnitt in Fig. 7D).

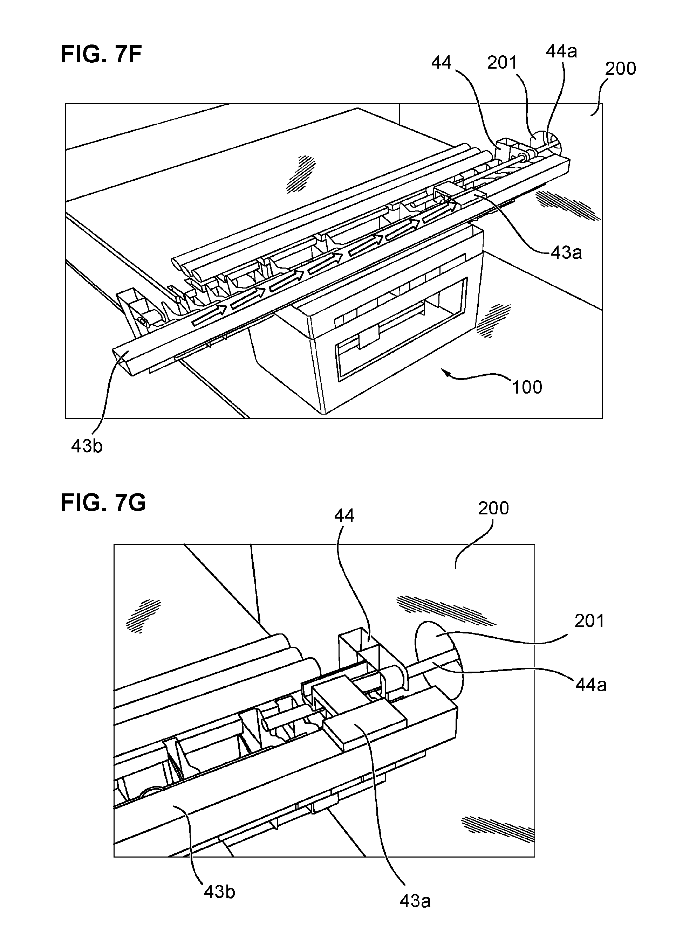

Wie in Fig. 7F gezeigt ist, wird der Stützabschnitt 43a im Folgenden wieder in axialer Richtung entlang des Führungsabschnitts 43b zu der Werkzeugmaschine 200 hin verfahren, wobei die Schieber-Stange 44a in die Öffnung 201 der Werkzeugmaschine 200 eingeschoben wird und dabei die Stange 1a weiter in die Werkzeugmaschine 200 einschiebt, um die Stange 1a bis an eine Spindel der Werkzeugmaschine zuzuführen, so dass die Stange 1a an der Werkzeugmaschine 200 bearbeitet werden kann (siehe auch Fig. 7G).

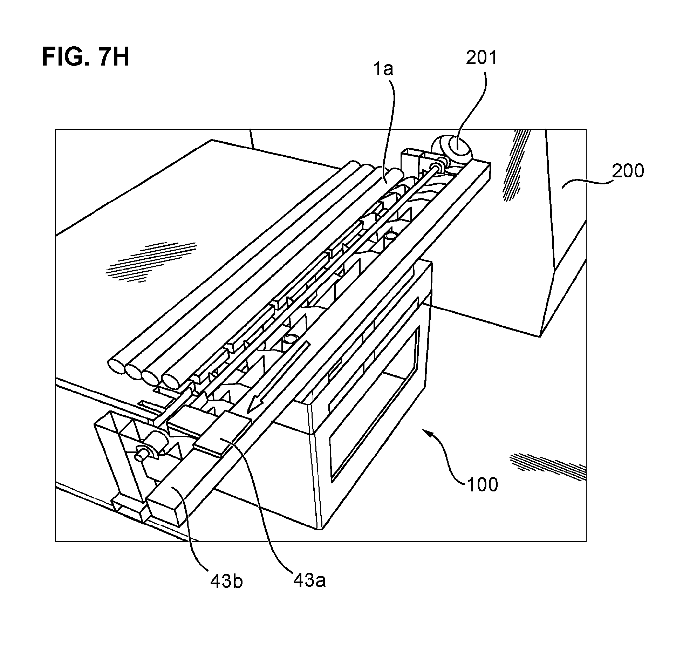

Wenn der Stützabschnitt 43a wieder in entgegengesetzter Richtung entlang des Führungsabschnitts 43b verfahren ist, wobei die Schieber-Stange 44a aus der Werkzeugmaschine 200 gezogen wird, und nachdem die Schieber-Einrichtung 44 die Schieber-Stange 44a wieder in deren Ausgangsposition verfahren hat (entgegen der Richtung aus Fig. 7D), ist die Ladevorrichtung 100 wieder in einem Zustand wie in Fig. 7H gezeigt, der weiterhin einem Zustand gemäß Fig. 1A entspricht. Somit kann mittels der Transportelemente 3 erneut eine auf dem Lagerelement 2 gelagerte Stange 1a zu der Endposition auf den Zuführelementen 4 transportiert werden (siehe z.B. Figs. 1A bis 1E).

Alle vorstehend beschriebenen Ausführungsbeispiele der vorliegenden Erfindung haben gemeinsam, dass die Ladevorrichtung zum Laden von Stangen zur Bearbeitung in einer Werkzeugmaschine dazu eingerichtet ist, eine Stange von einer Ausgangsposition in eine Endposition zu verbringen und die Stange aus der Endposition der Werkzeugmaschine zuzuführen. Die Ladevorrichtung umfasst einen Auflageabschnitt zur Bevorratung der Ladevorrichtung mit mindestens einer Stange, die in der Ausgangsposition auf dem Auflageabschnitt positioniert ist, und eine verfahrbare Transporteinrichtung zum Transport der Stange von der Ausgangsposition in die Endposition. Die Transporteinrichtung ist dazu eingerichtet, in einer Abwärtsbewegung die Stange infolge ihrer Schwerkraft entlang eines abwärts geneigten Führungsabschnitts abwärts zu transportieren, wobei die Stange durch einen ersten Stützabschnitt der Transporteinrichtung abgestützt wird.

Zusammenfassend stellt die vorliegende Erfindung eine Ladevorrichtung zum Laden von Stangen zur Bearbeitung an einer Werkzeugmaschine bereit, die die Nachteile des Stands der Technik vermeiden kann und insbesondere einen schnellen und effizienten Ladezyklus ermöglicht, der besonders stoßarm bzw. frei von Stößen ausgeführt werden kann. Des Weiteren ermöglicht die vorliegende Erfindung es besonders vorteilhaft, die erfindungsgemäße Ladevorrichtung an unterschiedliche Stangenquerschnitte der zu landenden Stangen anzupassen. Eine aufwendige Justierung eines Neigungswinkels von Rückhalteorgangen bzw. Rückhaltefingern mittels eines komplizierten Mechanismus ist nicht erforderlich.

## Patentansprüche

1. Ladevorrichtung zum Laden von Stangen zur Bearbeitung in einer Werkzeugmaschine, wobei die Ladevorrichtung dazu eingerichtet ist, eine Stange (1a) von einer Ausgangsposition in eine Endposition (42) zu verbringen und die Stange (1a) aus der Endposition (42) der Werkzeugmaschine zuzuführen, mit
einem Auflageabschnitt (21) zur Bevorratung der Ladevorrichtung mit mindestens einer Stange (1a), die in der Ausgangsposition auf dem Auflageabschnitt (21) liegt, und
einer verfahrbaren Transporteinrichtung (3) zum Transport der Stange (1a) von der Ausgangsposition in die Endposition,
**dadurch gekennzeichnet, dass**
die Transporteinrichtung (3) dazu eingerichtet ist, in einer Abwärtsbewegung die Stange (1a) infolge ihrer Schwerkraft entlang eines abwärts geneigten Führungsabschnitts (41b) abwärts zu transportieren, wobei die Stange (1a) durch einen ersten Stützabschnitt (31a) der Transporteinrichtung (3) abgestützt wird.

2. Ladevorrichtung nach Anspruch 1, **dadurch gekennzeichnet, dass** die Transporteinrichtung (3) weiterhin dazu eingerichtet ist, die Stange (1a) in einer Aufwärtsbewegung von dem Auflageabschnitt (21) abzuheben und die Stange (1a) entlang eines aufwärts geneigten Führungsabschnitts (51) aufwärts zu schieben, wobei die Stange durch einen zweiten Stützabschnitt (31b) der Transporteinrichtung (3) abgestützt wird.

3. Ladevorrichtung nach Anspruch 2, **dadurch gekennzeichnet, dass** die Stange (1a) in einer höchsten Position bei dem Transport von der Ausgangsposition zu der Endposition (42) von dem ersten und dem zweiten Stützabschnitt (31a, 31b) der Transporteinrichtung (3) abgestützt wird.

4. Ladevorrichtung nach Anspruch 2 oder 3, **dadurch gekennzeichnet, dass** die Transporteinrichtung ein Transportelement (3) mit einem ersten winkelförmigen Abschnitt (31a, 31b) umfasst, wobei ein erster Schenkel des Winkels den ersten Stützabschnitt (31a) und ein zweiter Schenkel des Winkels des ersten winkelförmigen Abschnitts (31a, 31b) den zweiten Stützabschnitt (31b) bildet.

5. Ladevorrichtung nach zumindest einem der vorangegangenen Ansprüche,
**dadurch gekennzeichnet, dass** die Transporteinrichtung (3) auf- und abwärts verfahrbar ist, insbesondere vertikal auf- und abwärts verfahrbar.

6. Ladevorrichtung nach zumindest einem der vorangegangenen Ansprüche
**dadurch gekennzeichnet, dass** der Auflageabschnitt (21) ein abwärts geneigter Auflageabschnitt (21) ist, auf dem die in der Ausgangsposition liegende Stange (1a) von einem Rückhalteelement (5) entgegen ihrer Schwerkraft zurückgehalten wird.

7. Ladevorrichtung nach Anspruch 6, **dadurch gekennzeichnet, dass** das Rückhalteelement (5) den aufwärts geneigten Führungsabschnitt (51) aufweist.

8. Ladevorrichtung nach zumindest einem der vorangegangenen Ansprüche,
**gekennzeichnet durch** eine Zuführeinrichtung, die dazu eingerichtet ist, die Stange (1a) aus der Endposition (42) der Werkzeugmaschine zuzuführen, wobei die Zuführeinrichtung ein Zuführelement (4) mit einem Aufnahmeabschnitt (41a, 41b) umfasst, in dem die Stange (1a) in der Endposition (42) liegt.

9. Ladevorrichtung nach Anspruch 8, **dadurch gekennzeichnet, dass** das Zuführelement (4) den abwärts geneigten Führungsabschnitt (41b) aufweist.

10. Ladevorrichtung nach Anspruch 9, **dadurch gekennzeichnet, dass** das Zuführelement (4) einen zweiten winkelförmigen Abschnitt (41a, 41b) aufweist, wobei ein Schenkel des Winkels des zweiten winkelförmigen Abschnitts (41a, 41b) den abwärts geneigten Führungsabschnitt (41b) bildet.

11. Ladevorrichtung nach Anspruch 8, 9 oder 10, **dadurch gekennzeichnet, dass** die Zuführeinrichtung dazu eingerichtet ist, die Endposition (42) der Stange (1a) auf eine Zuführposition auszurichten, aus der die Stange (1a) der Werkzeugmaschine zuzuführen ist.

12. Ladevorrichtung nach Anspruch 11, **dadurch gekennzeichnet, dass** das Zuführelement (4) zum Ausrichten der Endposition (42) der Stange (1a) auf- und abwärts verfahrbar ist, insbesondere vertikal auf- und abwärts verfahrbar.

13. Ladevorrichtung nach zumindest einem der Ansprüche 8 bis 12, **dadurch gekennzeichnet, dass** das Zuführelement (4) den aufwärts geneigten Führungsabschnitt (51) aufweist.

14. Ladevorrichtung nach zumindest einem der Ansprüche 1 bis 13, **dadurch gekennzeichnet, dass** die Stange (1a) einen runden, insbesondere kreisrunden Querschnitt oder einen eckigen, insbesondere sechseckigen Querschnitt aufweist.

15. System mit einer Werkzeugmaschine (200) zum Bearbeiten einer Stange (1a) und einer Ladevorrichtung (100) nach zumindest einem der vorangegangenen Ansprüche zum Laden von Stangen zur Bearbeitung in der Werkzeugmaschine (200).
